# EUROPEAN PATENT APPLICATION

(11) **EP 2 690 375 A2**
(43) Date of publication of application: **29.01.2014**
(21) Application number: 13176563.8
(22) Date of filing: 15.07.2013
(51) Int. Cl.: F24J 2/06, F03G 6/06, F24J 2/07, F24J 2/08, F24J 2/12

(54) **Apparatus for utilizing radiation energy**

(30) Priority: 23.07.2012 DE 102012212837
(71) Applicant: BankWare Ltd., 1527 Sofia (BG)
(72) Inventor: Petkanchin, Lachezar Lazarov, 1527 Sofia (BG)
(74) Representative: Müller Schupfner & Partner

(57) **Abstract**

The current invention relates to an apparatus for utilizing radiation, comprising a collector unit (2), a transfer unit (4) and a working unit (6), wherein the collector unit (2) comprises at least one radiation reflecting surface (22) adapted to focus radiation and to direct said radiation to said transfer unit (4), wherein the transfer unit (4) comprises at least one transparent section, which is integrated into a wall of a first working fluid reservoir (62) of said working unit (6), wherein said first working fluid reservoir (62) comprises a working fluid (64), and wherein said transfer unit (4) is arranged such as to directly transmit radiation to said working fluid (64) to heat said working fluid (64).

## Description

This invention relates to an apparatus for utilizing radiation energy.

Several devices for utilizing different kinds of radiation are known from the prior art. Especially devices for transferring solar radiation energy, i.e. sunlight, into usable forms of energy, especially heat energy or electrical power, have experienced a remarkable raise in importance during the last years, even more due to increasing costs for fossil energy sources. Typically a collecting device collects radiation penetrating a certain area and focuses it to an area, where a part of the radiation energy can be transformed, for instance into heat energy. For transferring the heat energy into working media, in particular working fluids, the application of heat exchangers is known from the prior art. A significant disadvantage of this method is, that a major part of the collected heat is wasted by heating up structures, like walls of a working fluid container, which do not contribute to the actual working process. Furthermore, the high temperatures necessary to reach acceptable efficiency values cause material stress and increased energy losses.

Therefore, it is an object of the current invention to provide an apparatus for utilisation of radiation energy which improves the heat generation process and minimizes heat losses, as they appear in apparatuses known from the prior art.

This object is achieved by means of an apparatus according to independent claim 1. Additional advantages and features of preferred embodiments of the current invention are defined in the dependent claims.

According to the invention, there is provided an apparatus for utilizing radiation, comprising a collector unit, a transfer unit and a working unit, wherein the collector unit comprises at least one radiation reflecting surface adapted to focus radiation and to direct said radiation to said transfer unit, wherein the transfer unit comprises at least one transparent section, which is integrated into a wall of a first working fluid reservoir of said working unit, wherein said first working fluid reservoir comprises a working fluid, and wherein said transfer unit is arranged such as to directly transmit radiation to said working fluid to heat said working fluid. The utilizing of radiation preferably comprises a transforming process of radiation energy into heat energy, wherein the latter can be further transformed into other forms of energy or work, as for instance mechanical work or electrical power. The collector unit preferably comprises one or several mirrors, which reflect radiation, in particular at the wavelength range of solar radiation. The reflecting surface of said collector unit is preferably a smooth metal layer suitable for maximum reflection of incoming radiation. Said reflecting surface of said collector unit is expediently curved so as to focus reflected radiation into a focal point and thus concentrate the energy density of the reflected radiation into said focal point. The curvature of the reflecting surface of the collector unit is preferably of parabolic or spherical shape. In a preferred embodiment the collector unit comprises a plurality of reflecting surfaces, respectively mirrors, arranged adjacent to another or with certain distance from another and focusing preferably to one focal point. The focussed reflected radiation enters a transfer unit which guides said radiation into a first working fluid reservoir. The transfer unit consists preferably of material essentially transparent for radiation in a range of wavelength from 200nm to 2000nm and enables radiation of this range of wavelength, in particular solar radiation with wave lengths from 250nm to 1800nm, to pass the transfer unit with only very low absorption losses. The transfer unit is integrated into a wall of said first working fluid reservoir, i.e. the respective wall of said working fluid reservoir comprises a bore or hole in which the transfer unit is arranged and fixed. Said radiation enters the transfer unit through a first end surface of said transfer unit. A second end surface of said transfer unit defines an inner wall section of, respectively a inner surface section of the first working fluid reservoir at said bore. Said second end surface of the transfer unit preferably protrudes from said inner wall of the first working fluid reservoir. The first working fluid reservoir is a preferably cylinder-shaped hollow body adapted to contain a working fluid and to resist high pressures. Within said first working fluid reservoir a working fluid is arranged in such manner it directly contacts said transfer unit to directly receive radiation discharging from said transfer unit. Said working fluid absorbs said radiation, transfers it into heat energy. Consequently the temperature of said working fluid rises. To obtain a maximum radiation absorption and keeping the raise in temperature of the walls of the first working fluid reservoir low, it can be preferred to apply a reflecting surface to the inner walls of the first working fluid reservoir and thus reducing the radiation absorption at the inner walls. This can be especially advantageous when said working fluid is partially transparent or translucent for radiation in the respective range of wavelengths. The radiation inserted into the first working fluid reservoir gets reflected several times at said inner walls until being absorbed completely by said working fluid. Preferably said working unit comprises further means for utilizing the heat energy transferred into said working fluid. Thereby especially, the expansion of the working fluid caused by rising temperature and pressure can expediently be developed to drive mechanical means, like for instance a piston.

In a preferred embodiment said working fluid is provided only or does only flow within said working unit. In other words the working fluid is provided in a closed circuit, not gathered from the environment and not emitted to the environment after having passed through the working unit. Preferably the working fluid is a highly temperature-expanding fluid. Said working unit comprises preferably a Stirling motor as known from the prior art which is characterized by a closed working fluid circuit.

In an advantageous embodiment a second end of said transfer unit is formed as a lens to refract the emerging radiation such as to achieve essentially uniform radiation dispersion said first working fluid reservoir. Said end of the transfer unit forming a part of the inner wall of said first working fluid reservoir preferably comprises a lens-shaped geometry. In other words the end surface of said transfer unit, facing said working fluid, does expediently not have a planar shape aligned perpendicular to the main radiation direction within the transfer unit prior to the second end of said transfer unit but has the shape of a concave lens. As a preferred result, the radiation exiting the transfer unit is refracted, in particular dispersed. To reach an essentially uniform radiation dispersion in said first working fluid reservoir, it is furthermore preferred to arrange the transfer unit at a position of the wall of the first working fluid reservoir where the distances the radiation has to cover between said second end of the transfer unit and opposing walls of the transfer unit are essentially as equal as possible. It is in other words advantageous, if the dispersed radiation, starting from said second end of said transfer unit covers almost equal distances through the working fluid until reaching the inner wall of said first working fluid reservoir. In this manner, the radiation can essentially uniformly be absorbed by said working fluid and thereby induce heat to said working fluid. It can be furthermore preferred to arrange a plurality of transfer units at said first working fluid reservoir, distributed over the walls of said first working fluid reservoir in such manner, that the working fluid receives essentially uniform heat input.

Preferably, said second end of the transfer unit comprises a passage area where the radiation passes through, wherein the size of said passage area is advantageously 0.01 to 0.4, preferably 0.05 to 0.2 and particularly preferred 0.07 to 0.15 times the size of the inner wall area of said first working fluid reservoir. The size of said passing area of said transfer unit is an important parameter for the amount of energy to be induced to the working fluid. When having a certain amount of radiation energy collected by said collector unit, the energy density, respectively the radiation density, at said passage area increases if the passage area decreases. A high radiation density can result in high losses at the transfer unit due to a higher local radiation absorption in the material of the transfer unit. It is therefore preferred to configure the ratio between said passage area and said inner wall area in such manner, the required amount of radiation can pass said transfer unit causing minimum energy losses to heat a certain quantity of said working fluid. Preferably said passage area is not bigger than 0.4 times the size of said inner wall area of said first working fluid reservoir, because said passage area is expected to allow higher losses, especially due to infrared radiation, than the walls of said first working fluid reservoir. The bigger the size of said passage area is the higher the heat loss of said first working fluid reservoir is expected to get.

In an advantageous embodiment said transfer unit, preferably said second end of said transfer unit, comprises an essentially transparent heat insulation coating" adapted to reduce heat flow from said working fluid to the environment through said transfer unit. As a matter of fact radiation can leave the first working fluid reservoir through said transfer unit. In particular long wave radiation, like infrared radiation generated due to high temperatures of the working fluid, can pass said transfer unit and leak to the environment. It is therefore desired to reduce the stream of energy from said working fluid through the transfer unit to the environment to reduce the overall losses of said working unit. The insulation of said second end of said transfer unit can preferably be realized by an insulation coating, adapted to reflect radiation of a certain range of wavelength. In particular the insulation coating reflects a certain part of infrared radiation, since the hot working fluid is expected to emit radiation basically within this range of wavelength. It has to be mentioned, that said insulation coating will also restrain infrared radiation from entering the first working fluid reservoir, since it has the same reflection characteristics in both directions into the working fluid reservoir and outwards. Even though to this reduction of the absolute radiation energy input into said first working fluid reservoir, said insulation coating can be expedient, since a main part of the radiation leaking through the transfer unit is infrared radiation. In particular preferred said insulation coating reflects infrared radiation with wavelengths longer than 1200nm.

In particular preferably the transfer unit comprises a fibre optic cable with a first end capable of receiving radiation from said collector, wherein said first end of said fibre optic cable is preferably lens-shaped and adapted to refract incoming radiation such, that essentially collimated radiation enters said fibre optic cable. A fibre optic cable, as know principally from the prior art, are applicable to conduct radiation, in particular light. By means of total reflection at the lateral walls of said fibre optic cable, the radiation is prevented from leaking through said lateral walls, but is conducted from one end surface towards the other end. Preferably the fibre optic cable section of said transfer unit consists of heavy metal fluoride glasses, for instance ZBLAN which has an extraordinary high capability of conducting radiation in a high bandwidth of wavelengths with minimum losses due to absorption. To allow a high energy flow rate over the transfer unit, it can be advantageous to arrange a plurality of fibre optic cables, in parallel circuit manner. Said first end of said transfer unit can preferably be arranged integrated into a reflecting surface of said collector unit. For instance the first end of said transfer unit can be arranged in a focal point at said first reflecting surface of said collector unit, where said secondary reflecting surface focuses radiation. Expediently said first end of said transfer unit is formed as a concave lens, so as to refract incoming diffused radiation such that it continues as essentially collimated radiation within said fibre optic cable. By means of said fibre optic cable it is possible to arrange the working unit distanced from the collector unit. The working unit can, for instance, be arranged at more comfortable position near the ground while the collector unit can be arranged at higher altitude to collect as much sunlight as possible. Especially advantageous is the use of at least partially flexible material for said fibre optic cable. By this means the radiation conducting connection between said collection unit and said working remains even if the two units move relatively to another, for instance while adjusting said collector unit at optimum orientation towards the sun.

In advantageous manner said working fluid comprises radiation absorbing particles which raise the amount of energy transferred to said working fluid by radiation. Said radiation absorbing particles are preferably evenly distributed in said working fluid. Advantageously said particles contain graphite, which has high absorption coefficient, also called attenuation coefficient, and is thus suitable to transform most of the penetrating radiation energy into heat energy, respectively infrared radiation. Furthermore the lubricating characteristics of graphite can be utilized in an advantageous manner to improve the working process, especially in view of moving parts of the working unit like for instance a piston. It is furthermore preferred to have a particle size which results in only minor adverse effects on the working process in said working unit. It is assumed that with decreasing particle size the overall disturbance of the working process by said particles decreases. Furthermore the particle density of said working fluid is preferably adjusted to have an optimum equilibrium between the absorption rate of said working fluid and the fluidity of said working fluid to guarantee a smooth working process. In particular a high particle density is assumed to cause a high viscosity of said working fluid and therefore impede the working process.

In advantageous manner said first working fluid reservoir comprises heat insulated walls. In order to avoid heat losses through the walls of said first working fluid reservoir, said walls are preferably heat insulated. Said heat insulation can for example have a radiation reflecting metal coating and/or a shell of material with low heat conduction values at the inner and/or outer wall of the first working fluid reservoir. Combined with said insulation coating at said transfer unit the energy losses of the working unit, i.e. heat flow from inside the first working fluid reservoir to the environment, can preferably be reduced. Preferably the overall efficiency of said apparatus can be increased.

In preferred manner the apparatus comprises a second working fluid reservoir, wherein at least said second working fluid reservoir comprises cooling means adapted to release heat to a heat sink. Said second working fluid reservoir is in particular preferred a second cylinder of a Stirling engine (alpha type). Preferably, said first working fluid reservoir is a first heated cylinder of said Stirling engine. By means of alternating heating of said working fluid in the first working fluid reservoir and cooling in the second working fluid reservoir mechanical power can be generated by said working unit. Advantageously, said first and second working fluid reservoir each comprise a piston, which is driven by pressure force resulting of expansion and compression of said working fluid. Said cooling means can preferably comprise cooling ribs and/or a cooling fluid adapted to convectively subduct heat energy from said second working fluid reservoir.

In an advantageous embodiment said working fluid reservoirs are fluidly connected, wherein said working fluid is alternately heated by radiation in said first working fluid reservoir and cooled down in said second working fluid reservoir. In preferred manner said working fluid is shifted between said first and second working fluid reservoir, wherein it is expediently alternately heated up in the first working fluid reservoir, then shifted to said second working fluid reservoir, cooled down and subsequently shifted back to said first working fluid reservoir. Preferably, during undergoing this cycle, the working fluid drives at least one piston which is preferably adapted to drive an axle or crank shaft. Said axle is preferably adapted to transfer mechanical energy to a generator to transform it into electric energy.

Expediently said transfer unit comprises a switching device to alternately transfer radiation to said working fluid or working fluids in one of said working fluid reservoirs. Preferably when both, the first and the second working fluid reservoir comprise a bore to adapt a second end of said transfer unit and said cooling means, a working cycle can be generated by alternately transferring radiation to the working fluid reservoirs. In advantageous manner said working fluid in one of the working fluid reservoirs, heats up, expands and drives preferably a piston, while the working fluid in the other working fluid reservoir cools down, shrinks and preferably drives another piston. To realize alternate feed with radiation to the respective working fluids said transfer unit comprises a switching device. Said switching device is in a first preferred embodiment a reflecting element, i.e. mirror which is rotatable in such manner that in a first rotation position radiation is guided to a second end of said transfer unit, arranged at said first working fluid reservoir and in a second rotation position radiation is guided a third end of said transfer unit arranged at said second working fluid reservoir. The rotation time is preferably very short, to minimise the loss of radiation energy during the shifting of position of said mirror. In another preferred embodiment said switching device comprises a piezo element, which is able to change its optical characteristics, in particular the reflection rate, when applying a certain voltage. Said piezo element can preferably assume at least two conditions of which each reflects radiation to selected working fluid reservoirs. Furthermore it is preferred to conduct the cooling process as alternating cycle, to avoid simultaneous heating by radiation and cooling by said cooling means. This can especially be realized by means of a flowing coolant, whose flow is controlled so as to only cool the working fluid reservoir which is not receiving radiation at the same time. It is to be understood that the working fluid reservoirs do not comprise insulated walls when comprising said cooling means and vice versa, since those two features serve exactly opposite aims. It is further advantageous to arrange more than two working fluid reservoirs, wherein only a certain number thereof is being heated simultaneously while the other working fluid reservoirs are cooled down. By this means a slower cooling rate can be compensated by an increase in cooling time.

In a further preferred embodiment a first piston and a second piston, each arranged displaceable in one of said working fluid reservoirs, are adapted to drive a crank shaft. The apparatus for utilizing radiation energy, in particular preferred solar radiation energy, can preferably generate mechanical power, which easily can be transferred into other forms of energy, like electrical power. Principles of arranging pistons and crank shaft to form a heat driven engine, like a Stirling engine, are known from the prior art.

Additional advantages and features of the current invention are shown in the following description of preferred embodiments of the current invention with reference to the attached drawings. Single features or characteristics of respective embodiments are explicitly allowed to be combined within the scope of the current invention.
Fig. 1 - shows a first preferred embodiment of the current invention,
Fig. 2 - shows another preferred embodiment of the current invention, and
Fig. 3 - shows another preferred embodiment of the current invention.

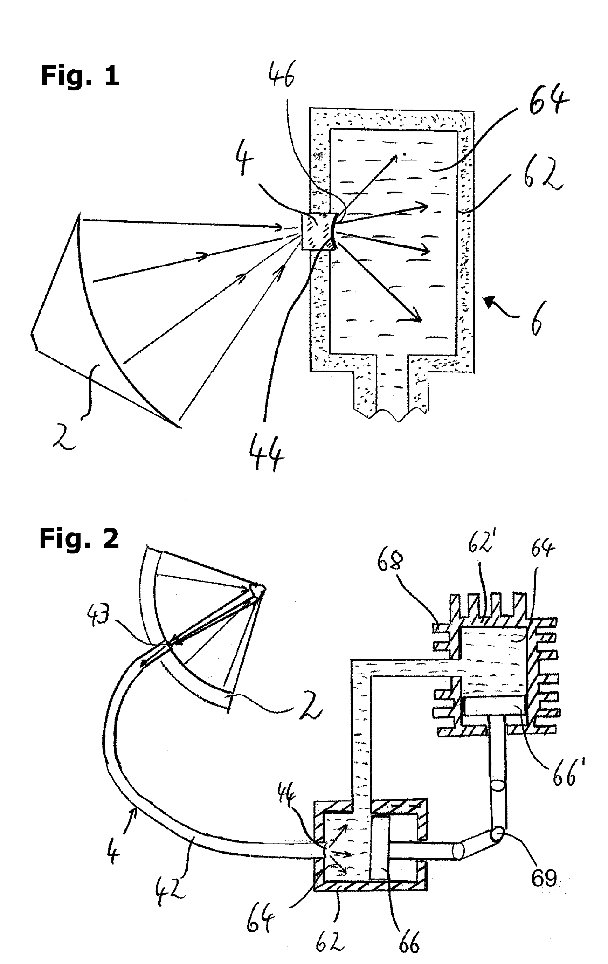

The apparatus shown in figure 1 comprises a collector unit 2, collecting radiation and focusing it to a transfer unit 4, whereby said transfer unit 4 has a second end 44, which is integrated into the inner wall of a first working fluid reservoir 62. Said first working fluid reservoir 62 is part of a working unit 6 and contains a working fluid 64. The end face of said second end 44 of the transfer unit 4 comprises an insulating coating 46 preferably capable of reducing the energy loss caused by infrared radiation from inside said first working fluid reservoir 62, respectively said working fluid 64, passing said transfer unit 4 and escaping to the environment. Expediently said insulating coating 46 is transparent to radiation of shorter wavelength than infrared radiation. In advantageous manner said second end 44 of said transfer unit 4 is formed as a lens, preferably concave, to disperse said radiation essentially homogeneously within said first working fluid reservoir 62, respectively within said working fluid 64. For means of a better absorption rate, said working fluid 64 preferably comprises radiation absorbing particles, for instance graphite flakes. Said collector unit 2 is preferably a mirror with high reflection rate for solar radiation. For means of focussing collected radiation said collecting unit 2 preferably comprises at least one curved reflecting surface, preferably formed as a parabolic mirror. As sketched in fig. 1 said first working fluid reservoir 62 preferably serves the heating of said working fluid 64. The hot working fluid 64 can thereafter leave said first working fluid reservoir 62 to reach other reservoirs of said working unit 6, where it for example drives mechanical means or is cooled down. Advantageously said working fluid 64 has a high heat expansion coefficient to gain maximum possible mechanical work values out of certain temperature rises of said working fluid 64. It can furthermore be preferred to boil a liquid working fluid 64 and to use the generated gas to carry out mechanical work.

Figure 2 shows a further preferred embodiment of said apparatus, wherein said transfer unit 4 comprises a fibre optic cable 42 and said working unit 6 comprises a second working fluid reservoir 62'. A first end 43 of said transfer unit 4 is preferably arranged at a focal point of said collector unit 2, to receive radiation of high density and forward it to said fibre optic cable 42. As shown said collector unit 2 comprises a second reflecting surface arranged in the first focal point of a first, concavely curved reflecting surface, wherein said first end 43 of said transfer unit 4 is arranged opposite to said second reflecting surface. Said first end 43 of said transfer unit might be arranged as well at a first focal point, opposite to the first, curved reflecting surface of said collector unit 2. For means of better radiation conduction within said fibre optic cable 42, said first end 43 of said transfer unit 4 is formed as a lens, preferably a concave lens. Said fibre optic cable 42 conducts said radiation into said first working fluid reservoir 62 to heat said working fluid 64. Said working fluid 64 drives a first piston 66, arranged inside said first working fluid reservoir 62. Expediently a second working fluid reservoir 62' is arranged fluidly connected to said first working fluid reservoir 62 and comprises cooling means 68, adapted to cool down said working fluid 64, and a second piston 66'. To achieve an oscillating flow of said working fluid 64 between said first working fluid reservoir 62 and said second working fluid reservoir 62' said pistons 66 and 66' are mechanically connected to one rotating attachment point 69. The preferred arrangement of said first an second working fluid reservoirs 62 and 62' and said pistons 66 and 66' is known from the prior art as Stirling alpha type engine and shall therefore not be described more precisely.

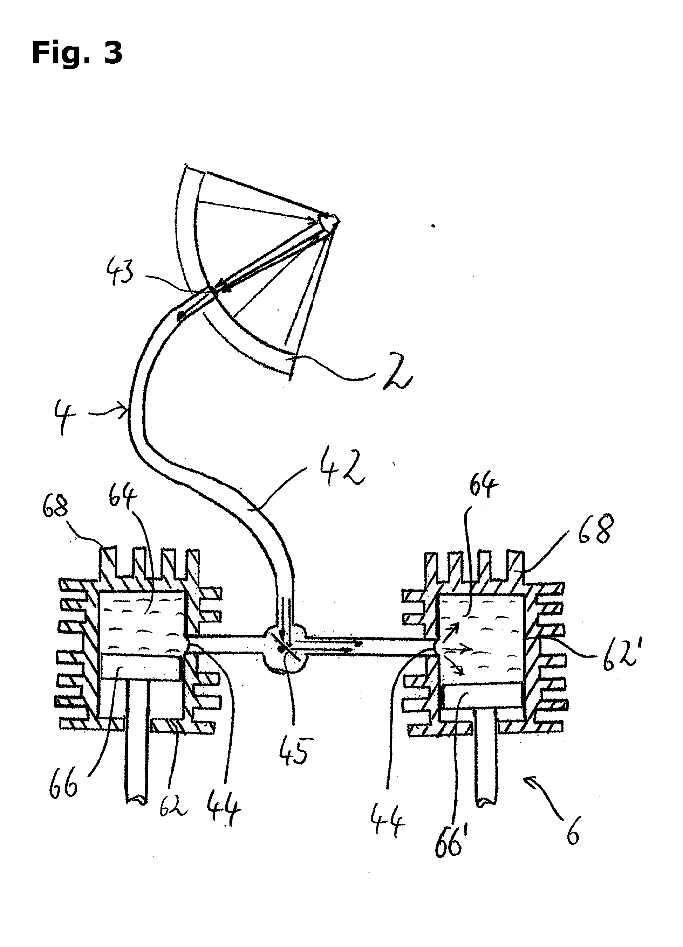

Figure 3 shows a further preferred embodiment of the current invention, wherein said transfer unit 4 comprises a switching device 45 and both, the first and the second working fluid reservoir 62 and 62' comprise cooling means 68. Said transfer unit 4 comprises a split point, where a first section of said fibre optic cable 42 splits up into at least two secondary sections of fibre optic cable 42, each comprising a second end 44 arranged at the or integrated into the walls of working fluid reservoirs 62, 62'. Said switching device 45 alternately directs the radiation to one of said working fluid reservoirs 62, 62'. Said switching device 45 realizes a preferably short shifting time to minimize the amount of radiation energy reflected to non-useful directions, i.e. for example back to said collector unit 2. Said switching device 45 is for instance a mirror moving rotational and/or translational. Preferably said switching device comprises a piezo element with very short shifting time and variable reflective characteristics. In preferred manner the working unit comprises more than two working reservoirs, for taking a cooling time expected to longer than the heating time into account. If the cooling process of said working fluid 64 takes for example twice as long as the heating process, it is advantageous to arrange three working fluid reservoirs, of which in one the working fluid is heated and the others it is cooled. In another preferred embodiment said switching device 45 is adapted to guide radiation to two or more working fluid reservoirs at the same time.

### Reference numerals:

- 2 -: collector unit
- 4 -: transfer unit
- 42 -: fibre optic cable
- 43 -: first end
- 44 -: second end
- 45 -: switching device
- 46 -: insulation coating
- 6 -: working unit
- 62 -: first working fluid reservoir
- 62' -: second working fluid reservoir
- 64 -: working fluid
- 66 -: first piston
- 66' -: second piston
- 68 -: cooling means
- 69 -: attachment point

## Claims

1. Apparatus for utilizing radiation, comprising
a collector unit (2), a transfer unit (4) and a working unit (6),
wherein the collector unit (2) comprises at least one radiation reflecting surface (22) adapted to focus radiation and to direct said radiation to said transfer unit (4),
wherein the transfer unit (4) comprises at least one transparent section, which is integrated into a wall of a first working fluid reservoir (62) of said working unit (6),
wherein said first working fluid reservoir (62) comprises a working fluid (64), and
wherein said transfer unit (4) is arranged such as to directly transmit radiation to said working fluid (64) to heat said working fluid (64).

2. Apparatus according to claim 1,
wherein said working fluid (64) is provided only or does only flow within said working unit (6).

3. Apparatus according to any of the preceding claims,
wherein a second end (44) of said transfer unit (4) is formed as a lens to refract the emergent radiation such as to achieve essentially uniform radiation dispersion in said first working fluid reservoir (62).

4. Apparatus according to any of the preceding claims,
wherein said transfer unit (4) comprises an essentially transparent heat insulation coating (46), adapted to reduce heat flow from said working fluid (64) to the environment through said transfer unit (4).

5. Apparatus according to any of the preceding claims,
wherein said transfer unit (4) comprises a fibre optic cable (42) with a first end (43) capable of receiving radiation from said collector unit (2), and
wherein said first end (43) of said fibre optic cable (42) is preferably lens-shaped and adapted to refract the incoming radiation such, that essentially collimated radiation enters said fibre optic cable (42).

6. Apparatus according to any of the preceding claims,
wherein said working fluid (64) comprises radiation absorbing particles which raise the amount of energy transferred to said working fluid (64) by radiation.

7. Apparatus according to any of the preceding claims,
wherein said first working fluid reservoir (62) comprises heat insulated walls.

8. Apparatus according to any of the preceding claims,
wherein said working unit (6) comprises a second working fluid reservoir (62'), and
wherein at least said second working fluid reservoir (62') comprises cooling means (68) adapted to release heat to a heat sink.

9. Apparatus according to claim 8,
wherein said working fluid reservoirs (62, 62') are fluidly connected, and
wherein said working fluid (64) is alternately heated by radiation in said first working fluid reservoir (62) and cooled down in said second working fluid reservoir (62').

10. Apparatus according to claim 8,
wherein said transfer unit (4) comprises a switching device (45) to alternately transfer radiation to said working fluid (64) or working fluids (64) in one of said working fluid reservoirs (62, 62').

11. Apparatus according to any of claims 8 to 10,
wherein a first piston (66) and a second piston (66'), each arranged displaceable in one of said working fluid reservoirs (62, 62'), are adapted to drive a crank shaft.
